# EUROPEAN PATENT APPLICATION

(11) **EP 4 317 127 A1**
(43) Date of publication of application: **07.02.2024**
(21) Application number: 21931958.9
(22) Date of filing: 26.03.2021
(51) Int. Cl.: C07C 215/08, C07C 229/24

(54) **EUTECTIC MIXTURE AND LIQUID COMPOSITION**

(71) Applicant: Daicel Corporation, Osaka 530-0011 (JP); Kyoto University, Kyoto-shi, Kyoto 606-8501 (JP)
(72) Inventor: WATANABE, Takashi, Kyoto-shi, Kyoto 606-8501 (JP); SAITO, Kaori, Kyoto-shi, Kyoto 606-8501 (JP); HASHIZUME, Tomohiro, Tokyo 108-8230 (JP); KITAYAMA, Kenji, Tokyo 108-8230 (JP)
(74) Representative: Hoffmann Eitle
(86) International application number: PCT/JP2021/012964
(87) International publication number: WO 2022/201519

(57) **Abstract**

Disclosed is a eutectic mixture containing a first component and a second component as main components. The first component is a quaternary ammonium salt, and the second component is an aminocarboxylic acid and/or a derivative thereof, the aminocarboxylic acid having a -COOH group and an -NH- group in the same molecule. The eutectic mixture has a melting point, Tm, which is lower than the melting point of the first component, T₁, and which is lower than the melting point of the second component, T₂. The eutectic mixture is in a homogeneous liquid state at a temperature higher than the melting point, Tm. Disclosed is a liquid composition containing a third component dissolving in the eutectic mixture. The third component contains one or two or more selected from cellulose, hemicellulose, and lignin.

## Description

### Technical Field

The present invention relates to a eutectic mixture and a liquid composition containing the eutectic mixture.

### Background Art

Heating media that are in a liquid state in a broad temperature region and safe and inexpensive are materials useful in various fields. For example, oils, synthetic oils such as silicone oils, polychlorinated biphenyl (PCB), and the like, molten salts, and the like are known as heating media applicable at high temperatures. Nitrites are applicable at high temperatures near 400°C, but become solid through temperature reduction, sometimes causing the clogging or the like of piping. Most oils conventionally used as heating media have flash point and combustibility, thus being of concern for safety. Oils with high flash point suffer from a problem of low flowability due to high viscosity, and a problem of solidification at low temperatures. PCB, an example of synthetic oils with high thermal stability and low flow viscosity, is harmful to human bodies even in an extremely small amount. Meanwhile, silicone oils, which are highly thermally stable, incombustible, and less harmful to organisms, are expensive, and industrial use thereof may be limited.

Use of various biomasses as renewable resources alternative to petroleum resources has been recently proposed. For example, use of plant-derived biomasses including wood biomass, herb biomass, cellulose, hemicellulose, lignin, and the like has been examined. Known solvents capable of dissolving such plant biomasses include lithium chloride/dimethylacetamide, ionic liquids, and the like. However, generalized use of them is still difficult because of issues of safety and cost such as use of lithium, which is an expensive rare metal, use of an organic solvent reported to pose a risk of mutagenesis, and the like.

A mixture of choline chloride/urea has been reported to form a deep eutectic solvent and be in a liquid state at room temperature, and dissolve cellulose therein. However, Non Patent Literature 1 discloses that the solubility of cellulose in the mixture of choline chloride/urea is 0.2% or less, allowing little dissolution of cellulose. Urea is a substance generated in bodies of humans, and may cause various adverse effects if being accumulated to high concentration. Thus, use of urea is not preferable in terms of safety.

Patent Literatures 1 to 5 disclose deep eutectic solvents consisting of various combinations of compounds. For example, Patent Literature 1 discloses a deep eutectic solvent containing N,N,N-trimethylglycine and trifluoroacetamide for use in fixing and preserving a biological sample. Patent Literature 2 proposes a fire-extinguishing foam composition containing a deep eutectic solvent consisting of two components or three components. Patent Literature 3 discloses use of a deep eutectic solvent obtained by combining compounds having specific structures for fixing a biomolecule.

Patent Literature 4 proposes a method of preparing a flavor composition by using a deep eutectic solvent containing at least two compounds being solid at 25°C and water and/or glycerol. Patent Literature 5 discloses a recycling method in which corn stems are pretreated by using a eutectic solvent containing choline chloride, aspartic acid, and glutamic acid at a molar ratio of 2:0.5:0.5 to 2:1.5:1.5.

### Citation List

### Patent Literature

Patent Literature 1: Japanese Patent Laid-Open No. 2019-141098
Patent Literature 2: Japanese Translation of PCT International Application Publication No. 2019-528814
Patent Literature 3: Japanese Patent No. 6527616
Patent Literature 4: Japanese Translation of PCT International Application Publication No. 2016-538405
Patent Literature 5: Chinese Patent Publication No. 106086106

### Non Patent Literature

Non Patent Literature 1: Q. Zhang, M. Benoit, K. De Oliveira Vigier, J. Barrault, F. Jérôme, Chem. Eur. J. 2012, 18, 1043-1046

### Summary of Invention

### Technical Problem

The number of combinations of compounds disclosed in Patent Literatures 1 to 5 is enormous, and each of them has been selected for the purpose of applying it to specific use. It is not easy to select a combination of compounds that serve as safe and inexpensive heating media and are suitable as solvents for plant biomasses.

No solvent has been proposed yet that is applicable as a heating medium that is superior in safety and workability, easy to produce, and applicable in a broad temperature region, and further applicable as a solvent for plant biomasses. An object of the present invention is to provide a eutectic mixture and a liquid composition that are superior in safety and workability and easy to produce.

### Solution to Problem

A eutectic mixture according to the present disclosure contains a first component and a second component as main components. The first component is a quaternary ammonium salt, and the second component is an aminocarboxylic acid and/or a derivative thereof, the aminocarboxylic acid having a -COOH group and an -NH- group in the same molecule. The eutectic mixture has a melting point, Tm, which is lower than the melting point of the first component, T₁, and which is lower than the melting point of the second component, T₂. The eutectic mixture is in a homogeneous liquid state at a temperature higher than the melting point, Tm.

The total content of the first component and the second component is preferably 99% by weight or more based on the entire eutectic mixture.

The melting point, Tm, is preferably higher than 0°C and lower than 50°C. The difference between the melting point of the first component, T₁, and the melting point, Tm, (T₁ - Tm), is preferably 100°C or more.

The first component is preferably selected from quaternary ammonium salts represented by the following general formula (1): 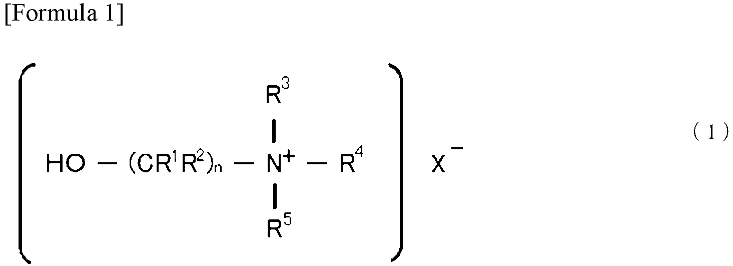 wherein n is an integer of 1 to 3, R¹ and R² are each independently a hydrogen atom or an alkyl group having 1 to 5 carbon atoms, R³, R⁴, and R⁵ are each independently an alkyl group having 1 to 5 carbon atoms, and X is a halogen group.

The first component is preferably choline chloride.

The second component is preferably an aminocarboxylic acid and/or a derivative thereof, the aminocarboxylic acid represented by the following general formula (2): 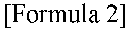 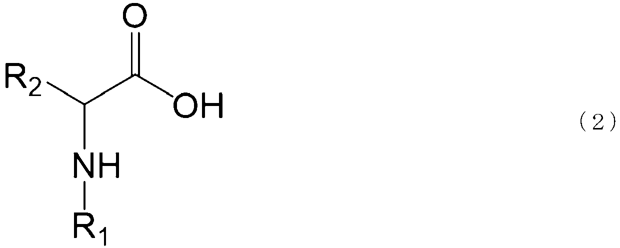 wherein R₁ and R₂ are each independently a hydrogen atom or a hydrocarbon group optionally having a substituent group.

The second component is preferably an aminocarboxylic acid and/or a derivative thereof, the aminocarboxylic acid represented by the following general formula (3): 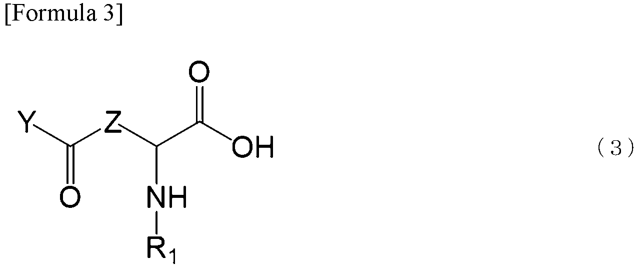 wherein R₁ is a hydrogen atom or a hydrocarbon group optionally having a substituent group, Y is a functional group containing a heteroatom, and Z is an alkylene group having 5 or less carbon atoms and optionally having an unsaturated bond.

The second component is preferably an aminocarboxylic acid and/or a cyclized derivative thereof. The second component is preferably selected from glutamine, glutamic acid, and pyroglutamic acid.

A liquid composition according to the present disclosure contains: any aforementioned eutectic mixture; and a third component dissolved in the eutectic mixture. The third component contains one or two or more selected from cellulose, hemicellulose, and lignin.

The third component preferably contains lignocellulose. The third component preferably contains one or two or more selected from wood, pulp, and linter.

The liquid composition is preferably in a liquid state at a temperature equal to or lower than 25°C.

A molded article according to the present disclosure is formed from any aforementioned liquid composition.

### Advantageous Effects of Invention

The eutectic mixture of the present disclosure is easy to produce by mixing and heating substantially two components. The eutectic mixture is in a liquid state and has flowability in a broad temperature region, thus being superior in workability. The eutectic mixture homogeneously dissolves plant biomasses including cellulose, hemicellulose, and lignin to form a liquid composition.

### Brief Description of Drawings

[Figure 1] Figure 1 is a graph representing the relationship between the composition of a eutectic mixture according to an embodiment of the present invention and the melting point thereof.
[Figure 2] Figure 2 is a photograph demonstrating a good melting state of the first component and the second component.
[Figure 3] Figure 3 is photographs showing a liquid composition according to an embodiment of the present invention, where Figure 3(a) shows it before dissolution and Figure 3(b) shows it after dissolution.
[Figure 4] Figure 4 is electron micrographs of a liquid composition according to an embodiment of the present invention, where Figure 4(a) shows it before dissolution and Figure 4(b) shows it after dissolution.

### Description of Embodiments

Hereinafter, an example of preferred embodiments will be specifically described. Configurations and combinations thereof and others in each embodiment are an example, and addition, omission, substitution, and other modification of configurations may be appropriately made without departing from the spirit of the present disclosure. The present disclosure is not limited by the embodiments, and limited only by the scope of claims. Each mode disclosed herein can be combined with any other feature disclosed herein.

### [Eutectic Mixture]

The eutectic mixture of the present disclosure contains a first component and a second component as main components, wherein the first component is a quaternary ammonium salt and the second component is an aminocarboxylic acid and/or a derivative thereof, the aminocarboxylic acid having a -COOH group and an -NH- group in the same molecule. The eutectic mixture has a melting point, Tm, which is lower than the melting point of the first component, T₁, and which is lower than the melting point of the second component, T₂. The eutectic mixture is in a homogeneous liquid state at a temperature higher than the melting point, Tm. Here, the term "homogeneous liquid state" means that no substantially solid component is present in the eutectic mixture.

The eutectic mixture of the present disclosure is easy to produce by mixing and heating the first component and the second component. The eutectic mixture has high thermal stability at temperatures near the melting point of the first component, T₁, or the melting point of the second component, T₂, and the melting point of the eutectic mixture, Tm, is sufficiently lower than the melting point of the first component, T₁, and the melting point of the second component, T₂. The eutectic mixture is in a homogeneous liquid state and has flowability in a broad temperature region, thus being superior in workability. In addition, the eutectic mixture does not contain urea, the harmfulness of which to humans has been concerned, thus being superior in safety. Furthermore, the eutectic mixture is capable of homogeneously dissolving plant biomasses including cellulose, hemicellulose, and lignin, as described later.

In the specification of the present application, the term "main components" means that the first component and the second component are components accounting for at least 50% by weight or more of the entire eutectic mixture. The total content of the first component and the second component in the eutectic mixture of the present disclosure is preferably 90% by weight or more, and more preferably 99% by weight or more based on the entire eutectic mixture. Most preferably, the eutectic mixture of the present disclosure consists substantially of the first component and the second component.

### [Melting Point]

The melting point of the eutectic mixture of the present disclosure, Tm, is preferably higher than 0°C and lower than 50°C. In other words, the eutectic mixture can exist as a liquid having flowability at at least 50°C or higher. The eutectic mixture allows troubles due to solidification in cooling, such as clogging or the like of piping, to be avoided. The melting point of the eutectic mixture, Tm, is preferably 40°C or lower, and more preferably 30°C or lower. The melting point of the eutectic mixture of the present disclosure, Tm, may be higher than 0°C and 40°C or lower, or higher than 0°C and 30°C or lower. Preferred is a eutectic mixture having a melting point, Tm, equal to or lower than room temperature (20°C ± 5°C), that is, being in a liquid state at room temperature. For measurement of the melting point, Tm, a known method such as a visual observation method in accordance with JIS K0065, a thermal analysis method, and the like can be used. In principle, the melting point of a substance and the freezing point of the same substance are equal to each other.

As described above, the melting point of the eutectic mixture of the present disclosure, Tm, is lower than the melting point of the first component, T₁, and the melting point of the second component, T₂. From the viewpoint of giving a eutectic mixture being in a liquid state in a broader temperature region, the difference between the melting point of the first component, T₁, and the melting point, Tm, (T₁ - Tm), is preferably 100°C or more, more preferably 110°C or more, and further preferably 120°C or more. From the same viewpoint, the difference between the melting point of the second component, T₂, and the melting point, Tm, (T₂ - Tm), is preferably 60°C or more, more preferably 70°C or more, and further preferably 80°C or more. Any upper limit values may be set for the difference (T₁ - Tm) and the difference (T₂ - Tm) without limitation, but, from the viewpoint of ease of production, the difference (T₁ - Tm) is preferably 250°C or less and the difference (T₂ - Tm) is preferably 200°C or less.

### [First Component]

In the eutectic mixture of the present disclosure, the first component is a quaternary ammonium salt. Quaternary ammonium salts of any type may be used, without limitation, that, through being mixed and heated with the second component described later, allow the formation of a eutectic mixture having a melting point, Tm, which is lower than the melting point of the first component, T₁, and which is lower than the melting point of the second component, T₂.

Here, the quaternary ammonium salt is defined as a salt consisting of an ammonium cation having substituent groups and an anion (counterion). The substituent groups bonding to N may be the same or different. Preferred as each substituent group is an aliphatic or aromatic hydrocarbon group. The hydrocarbon group may have a substituent group such as a hydroxy group, a halogen group, an amino group, a nitrile group, a carbonyl group, and the like. The number of carbon atoms of the hydrocarbon group is preferably 1 or more and more preferably 2 or more, and preferably 10 or less and more preferably 9 or less. The number of carbon atoms of the hydrocarbon group may be 1 or more and 10 or less, or 2 or more and 9 or less. The anion of the quaternary ammonium salt is typically a halogen ion such as a chloride ion, a bromide ion, and the like. Examples of other anions include organic carboxylate anions such as an acetate anion, a propionate anion, a butyrate anion, and the like, and organic sulfonate anions such as a methanesulfonate anion, an ethanesulfonate anion, a propanesulfonate anion, a para-toluenesulfonate anion, and the like, and others.

Specific examples of such a quaternary ammonium salt include choline chloride, triethyl-2-hydroxyethylammonium chloride, triethyl-2-hydroxyethylammonium bromide, triethyl-2-hydroxyethylammonium iodide, tributyl-2-hydroxyethylammonium chloride, tributyl-2-hydroxyethylammonium bromide, tributyl-2-hydroxyethylammonium iodide, tetramethylammonium chloride, tetraethylammonium chloride, tetrapropylammonium chloride, tetrabutylammonium chloride, benzyltrimethylammonium chloride, benzyltriethylammonium chloride, octyltrimethylammonium chloride, tetramethylammonium bromide, tetraethylammonium bromide, tetramethylammonium iodide, tetraethylammonium iodide, trimethyl-2-hydroxyethylammonium acetate, trimethyl-2-hydroxyethylammonium methanesulfonate, and the like.

Preferred as the first component are one or two or more selected from quaternary ammonium salts represented by the following general formula (1): 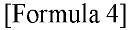 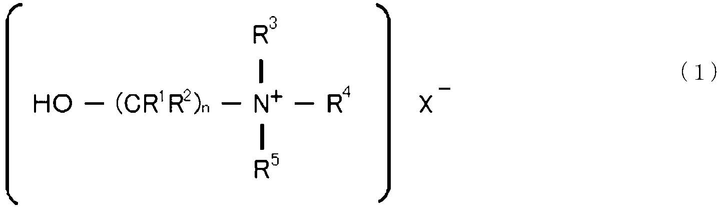 wherein n is an integer of 1 to 3, R¹ and R² are each independently a hydrogen atom or an alkyl group having 1 to 5 carbon atoms, R³, R⁴, and R⁵ are each independently an alkyl group having 1 to 5 carbon atoms, and X is a halogen group.

Preferred from the viewpoints of cost and availability is a eutectic mixture the first component of which is choline chloride.

From the viewpoints of ease of production and thermal stability, the melting point of the first component, T₁, is preferably 400°C or lower and more preferably 380°C or lower, and preferably 100°C or higher, but is not limited thereto. The melting point, T₁, may be 100°C or higher and 400°C or lower, or 100°C or higher and 380°C or lower.

### [Second Component]

In the eutectic mixture of the present disclosure, the second component is an aminocarboxylic acid and/or a derivative thereof, the aminocarboxylic acid having a -COOH group and an -NH- group in the same molecule. Aminocarboxylic acids and/or derivatives thereof of any type may be used, without limitation, that, through being mixed and heated with the first component described above, allow the formation of a eutectic mixture having a melting point, Tm, which is lower than the melting point of the first component, T₁, and which is lower than the melting point of the second component, T₂. Examples of derivatives of the aminocarboxylic acid include a cyclized derivative. The cyclized derivative of the aminocarboxylic acid may be one formed by heating in production of the eutectic mixture.

Preferred as the second component from the viewpoint of easiness in giving the eutectic mixture of the present disclosure is an aminocarboxylic acid and/or a derivative thereof, the aminocarboxylic acid represented by the following general formula (2): 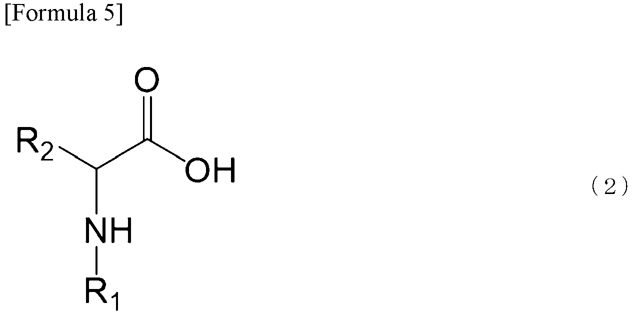 wherein R₁ and R₂ are each independently a hydrogen atom or a hydrocarbon group optionally having a substituent group.

Specific examples of the aminocarboxylic acid represented by the general formula (2) include glutamine, glutamic acid, asparagine, aspartic acid, glycine, serine, phenylalanine, tryptophan, threonine, methionine, tyrosine, alanine, valine, leucine, isoleucine, lysine, arginine, histidine, and the like.

More preferred as the second component is an aminocarboxylic acid and/or a derivative thereof, the aminocarboxylic acid represented by the following general formula (3): 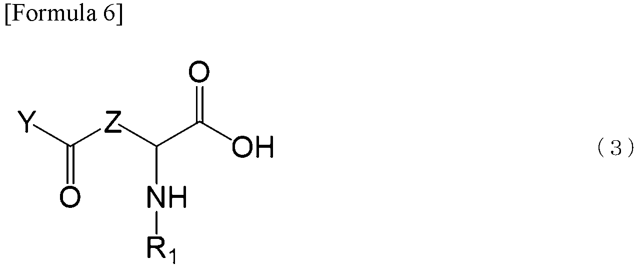 wherein R₁ is a hydrogen atom or a hydrocarbon group optionally having a substituent group, Y is a functional group containing a heteroatom, and Z is an alkylene group having 5 or less carbon atoms and optionally having an unsaturated bond.

Specific examples of the aminocarboxylic acid represented by the general formula (3) include glutamine, glutamic acid, asparagine, aspartic acid, and the like.

Preferred aminocarboxylic acids are glutamine and glutamic acid, and a preferred derivative of the aminocarboxylic acid is pyroglutamic acid. Preferred is a eutectic mixture in which the second component is selected from glutamine, glutamic acid, and pyroglutamic acid.

From the viewpoints of ease of production and thermal stability, the melting point of the second component, T₂, is preferably 400°C or lower and more preferably 380°C or lower, and preferably 100°C or higher, but is not limited thereto. The melting point, T₂, may be 100°C or higher and 400°C or lower, or 100°C or higher and 380°C or lower.

### [Method for Producing Eutectic Mixture]

The eutectic mixture of the present disclosure is obtained by mixing the first component and the second component to prepare a mixture and heating the mixture. An appropriate heating temperature and heating time are selected so that the first component and the second component can melt into a homogenous liquid state. From the viewpoint of prevention of coloring, mixing and heating are performed preferably under reduced pressure or in an inert gas atmosphere. Examples of the inert gas include nitrogen gas, argon gas, and the like.

### [Mixing Ratio of First Component and Second Component]

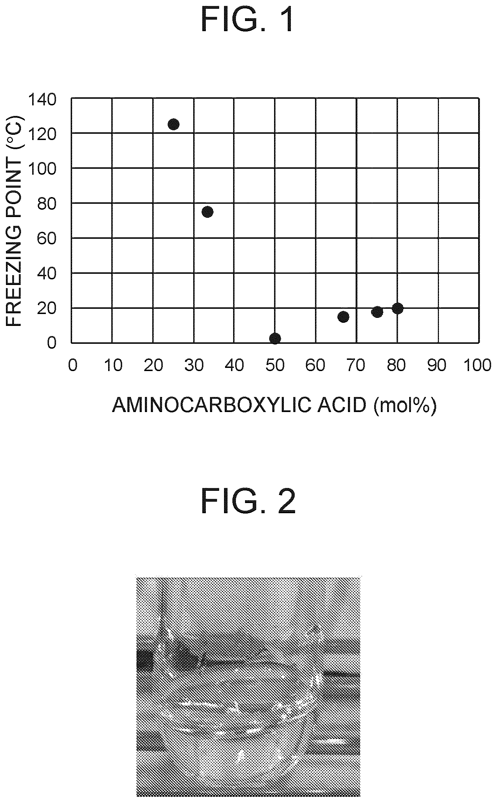

Any mixing ratio of the first component and the second component may be used, without limitation, that allows the first component and the second component to melt into a homogenous liquid state. For example, Figure 1 is a graph in which freezing points (melting points, Tm) of eutectic mixtures obtained from choline chloride (first component) and glutamic acid (second component) are plotted. The horizontal axis of the graph shows proportions (mol%) of glutamic acid (aminocarboxylic acid) in the mixture before heating, and the vertical axis of the graph shows freezing points of eutectic mixtures obtained. As illustrated, in this embodiment, a eutectic mixture in a homogeneous liquid state is formed at a molar ratio of the first component and the second component within the range of 1:1 to 1:4 (50 to 80 mol% of aminocarboxylic acid) at 25°C. A preferred mixing ratio can be selected depending on the selection of the types of the first component and the second component, or so that a desired melting point, Tm, can be given to the eutectic mixture.

### [Dispersion Solvent in Production of Eutectic Mixture]

In mixing the first component and the second component to prepare a mixture and heating the mixture, a solvent may be added to disperse the mixture. Use of such a dispersion solvent results in improved stirring condition in heating the mixture, and higher heat transfer is achieved. Thereby, heat is homogeneously transferred throughout the mixture, and as a result coloring and pyrolysis due to local heating or long-time heating are successfully prevented. Dispersion solvents of any type may be used, without limitation, but solvents capable of dissolving the first component and the second component are preferred. In order to allow the contents of the first component and the second component to be adjusted to desired ones by removing the dispersion solvent through concentration after production of the eutectic mixture, the boiling point of the solvent is preferably 200°C or lower, and more preferably 120°C or lower. Specific examples of the solvent include water, acetone, methyl ethyl ketone, methanol, ethanol, butanol, tetrahydrofuran, and the like.

### [Liquid Composition]

A liquid composition of the present disclosure contains the eutectic mixture described above and a third component. The third component is dissolved in the eutectic mixture. Here, the term "dissolving" refers to a state in which the eutectic mixture containing the third component is forming a homogeneous phase. Preferred liquid compositions are in a liquid state at a temperature equal to or lower than 25°C. More preferred are liquid compositions that are in a liquid state at a temperature equal to or lower than room temperature (20°C ± 5°C).

### [Third Component]

In the liquid composition of the present disclosure, the third component is one or two or more selected from cellulose, hemicellulose, and lignin. The third component may contain lignocellulose. The third component may contain one or two or more selected from wood, pulp, and linter.

From the viewpoint of ease of production, the content of the third component in the liquid composition is preferably 50% by weight or less, more preferably 35% by weight or less, further preferably 20% by weight or less, and particularly preferably 10% by weight or less, but is not limited thereto.

### [Method for Producing Liquid Composition]

Any method may be used, without limitation, for producing the liquid composition of the present disclosure. Typically, the liquid composition is obtained by mixing the eutectic mixture described above and the third component and heating by a conventionally known heating method. The heating conditions are appropriately adjusted depending on the types and amounts of the eutectic mixture and the third component. From the viewpoint of prevention of coloring, mixing and heating are performed preferably under reduced pressure or in an inert gas atmosphere. Examples of the inert gas include nitrogen gas, argon gas, and the like.

The third component contained in the liquid composition of the present disclosure is also a main constituent component of what is called plant biomass. In other words, the liquid composition of the present disclosure is a solution containing a primary constituent component of plant biomass. Molded articles formed from the liquid composition as a material have superior biodegradability due to the plant biomass.

Moreover, cellulose, hemicellulose, or lignin as the third component can be regenerated by bringing the liquid composition into contact with a fourth solvent being a poor solvent for the third component to give film-like molded products, fibrous molded products, particulate molded products, and porous molded products.

### Examples

Hereinafter, the advantageous effects of the present invention will be clarified with reference to Examples; however, the present invention should not be construed in a limited way on the basis of the description of those Examples. Unless otherwise stated, tests were all carried out at room temperature (20°C ± 5°C).

### [Examples 1 to 6]

Choline chloride (melting point: 302°C, manufactured by Tokyo Chemical Industry Co., Ltd., purity: 98% or higher) and glutamic acid (melting point: 225°C, manufactured by NACALAI TESQUE, INC., purity: 99% or higher) were weighed in a nitrogen atmosphere at molar ratios shown in Table 1 below, and each of the combinations was put into a test tube of 1 mm in diameter. Thereafter, the test tubes were heated to 150°C with use of an oil bath. At a temperature of 150°C, two straight lines (width: 1 mm) drawn at an interval of 2 mm on each test tube were visually observed through the test solution therein, and the two straight lines were clearly confirmed through the test solution for every case. This revealed that choline chloride and glutamic acid completely melt at 150°C at any of the molar ratios. Subsequently, the test tubes were cooled at a rate of 5°C/min, and temperatures at which the generation of crystals was found by visual observation were recorded as freezing points. The results obtained are shown in Table 1. A graph in which freezing points are plotted against proportions of glutamic acid (aminocarboxylic acid) for different Examples is shown in Figure 1. As shown in Figure 1 and Table 1, the freezing points (melting points) of Examples 1 to 6 are lower than the melting points of choline chloride and glutamic acid.

### [Examples 7 to 12]

Test solutions of Examples 7 to 12 were produced in the same manner as for Examples 1 to 6, except that compositions listed in Table 2 below were used. All the test solutions of Examples 7 to 12 homogeneously melted at 150°C. Subsequently, the test solutions were cooled to 25°C at a rate of 5°C/min. After leaving at 25°C for 24 hours, two straight lines (width: 1 mm) drawn at an interval of 2 mm on each test tube were visually observed through the test solution therein.

The results obtained are shown in Table 2. In Table 2, test solutions for which two straight lines were clearly confirmed by visual observation (homogeneous melting state) are rated as "good." Test solutions for which no line was found by visual observation or the two lines were blurred and looked like one line (poor melting) are rated as "poor." Figure 2 is a photograph of Example 7, which exhibited homogeneous melting state at 25°C.

### [Reference Examples 1 to 3]

Test solutions of Reference Examples 1 to 3 were produced in the same manner as for Examples 1 to 6, except that glutamic acid was replaced with urea (melting point: 133°C, manufactured by NACALAI TESQUE, INC., purity: 99% or higher), and molar ratios shown in Tables 1 and 2 below were used. Reference Examples 1 to 3 all homogeneously melted at 150°C, and exhibited homogeneous melting state after leaving at 25°C for 24 hours, as shown in Table 2. The freezing points of the test solutions are shown in Table 1.

**[Table 1]**

| | First component | Second component | Molar ratio | | Freezing point (°C) |
|---|---|---|---|---|---|
| | | | First component | Second component | |
| Example 1 | choline chloride | glutamic acid | 3 | 1 | 125 |
| Example 2 | choline chloride | glutamic acid | 2 | 1 | 75 |
| Example 3 | choline chloride | glutamic acid | 1 | 1 | 3 |
| Example 4 | choline chloride | glutamic acid | 1 | 2 | 15 |
| Example 5 | choline chloride | glutamic acid | 1 | 3 | 18 |
| Example 6 | choline chloride | glutamic acid | 1 | 4 | 20 |
| Reference Example 1 | choline chloride | urea | 1 | 1 | - |
| Reference Example 2 | choline chloride | urea | 1 | 2 | 12 |
| Reference Example 3 | choline chloride | urea | 1 | 4 | - |

**[Table 2]**

| | First component | Second component | Molar ratio | | Solubility (at 25°C) |
|---|---|---|---|---|---|
| | | | First component | Second component | |
| Example 7 | choline chloride | glutamic acid | 1 | 1 | good |
| Example 8 | choline chloride | glutamic acid | 1 | 2 | good |
| Example 9 | choline chloride | glutamic acid | 1 | 3 | good |
| Example 10 | choline chloride | glutamine | 1 | 1 | good |
| Example 11 | choline chloride | glutamine | 1 | 3 | good |
| Example 12 | choline chloride | glutamine | 1 | 5 | good |
| Reference Example 1 | choline chloride | urea | 1 | 1 | - |
| Reference Example 2 | choline chloride | urea | 1 | 2 | good |
| Reference Example 3 | choline chloride | urea | 1 | 4 | - |

### [Examples 13 to 26]

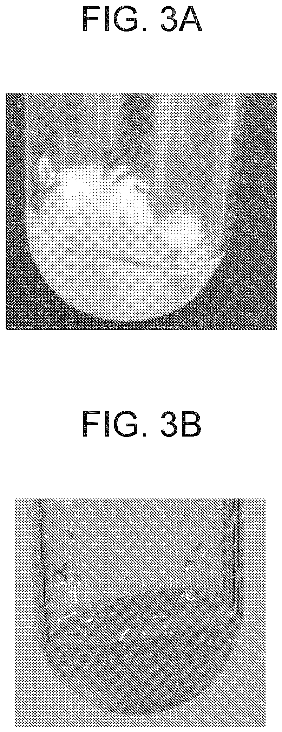

The choline chloride and glutamic acid described above were weighed in a nitrogen atmosphere at a molar ratio of 1:1, put into test tubes of 1 mm in diameter, and homogeneously melted by heating to 150°C with use of an oil bath to produce test solutions. Into each test solution, a third component was put to reach an amount shown in Table 3 below, and the test solutions were heated at 110°C for 5 hours with use of an oil bath. The dissolution states of the third components were visually observed, and the results are shown in Table 3. In Table 3, test solutions for which neither precipitated powder nor fiber was found by visual observation (homogeneous melting state) are rated as "good." Figure 3(a) is a photograph showing the state before heating, and Figure 3(b) is a photograph after heating at 110°C for 5 hours.

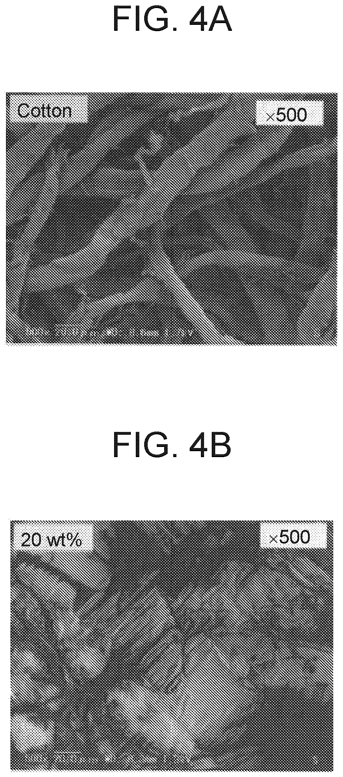

Electron microscopy (×500) was carried out for the liquid composition of Example 26 obtained. The result is shown in Figure 4. Figure 4(a) is an image obtained for a third component (Cotton linter) before dissolution, and Figure 4(b) is an image for Example 26 (20.0% by weight). It was found that almost no cellulose fiber was present in the liquid composition of Example 26.

### [Example 27]

A test solution with homogenous melting was produced in the same manner as for Example 14, except that the glutamine described above was used in place of glutamic acid. The test solution was evaluated on the solubility of the third component at 110°C, and the result is shown in Table 3 below.

### [Reference Example 4]

A test solution with homogenous melting was produced in the same manner as for Example 15, except that the urea described above was used in place of glutamic acid. A third component was put into the test solution, which was heated at 110°C for 6 hours with use of an oil bath, but almost no cellulose fiber dissolved. This result is shown as "poor" in Table 3 below.

**[Table 3]**

| | First component | Second component | Third component | Amount of third component (% by weight) | Solubility (at 110°C) |
|---|---|---|---|---|---|
| Example 13 | choline chloride | glutamic acid | Avicel | 0.2 | good |
| Example 14 | choline chloride | glutamic acid | Avicel | 1.0 | good |
| Example 15 | choline chloride | glutamic acid | Avicel | 3.0 | good |
| Example 16 | choline chloride | glutamic acid | Avicel | 5.0 | good |
| Example 17 | choline chloride | glutamic acid | Avicel | 7.0 | good |
| Example 18 | choline chloride | glutamic acid | Avicel | 10.0 | good |
| Example 19 | choline chloride | glutamic acid | pulp | 0.2 | good |
| Example 20 | choline chloride | glutamic acid | Tencel | 0.2 | good |
| Example 21 | choline chloride | glutamic acid | Cotton linter | 1.0 | good |
| Example 22 | choline chloride | glutamic acid | Cotton linter | 3.0 | good |
| Example 23 | choline chloride | glutamic acid | Cotton linter | 5.0 | good |
| Example 24 | choline chloride | glutamic acid | Cotton linter | 7.0 | good |
| Example 25 | choline chloride | glutamic acid | Cotton linter | 10.0 | good |
| Example 26 | choline chloride | glutamic acid | Cotton linter | 20.0 | good |
| Example 27 | choline chloride | glutamine | Avicel | 1.0 | good |
| Reference Example 4 | choline chloride | urea | Cotton linter | 3.0 | poor |

Details of the third components shown in Table 3 are as follows.
Avicel: microcrystalline cellulose manufactured by Asahi Kasei Corporation, weight-average degree of polymerization: 200 to 250, the registered trademark "Avicel"
Pulp: weight-average degree of polymerization: 1500 to 2000
Tencel: purified cellulose manufactured by Lenzing AG, the registered trademark "Tencel"
Cotton linter: cotton linter manufactured by Southern Cellulose Products, Inc., weight-average degree of polymerization: 800 to 1800

As shown in Tables 1 and 2, Examples allow a eutectic mixture in a homogeneous liquid state as with the cases of Reference Examples to be formed by a simple means of mixing and heating materials without using urea as a material. Moreover, Examples 7 and 8 and 10 to 12 allow a eutectic mixture in a homogeneous liquid state to be formed in a broad temperature region from 150°C to 25°C.

As shown in Table 3, the eutectic mixtures of Examples homogenously dissolve various types of cellulose, and allow the formation of a liquid composition having flowability at a temperature of 110°C. Furthermore, all the Examples were confirmed to be in a homogenous liquid state at a temperature of 25°C. The superiority of the present invention is obvious from those evaluation results.

### Industrial Applicability

The eutectic mixture described hereinbefore can be applied as a highly-safe thermally resistant solvent or a solvent for plant biomasses. The liquid composition described hereinbefore can be applied to use of various plant biomasses.

## Claims

1. A eutectic mixture comprising a first component and a second component as main components, wherein
the first component is a quaternary ammonium salt,
the second component is an aminocarboxylic acid and/or a derivative thereof, the aminocarboxylic acid having a -COOH group and an -NH- group in the same molecule, and
the eutectic mixture has a melting point, Tm, which is lower than melting point of the first component, T₁, and which is lower than melting point of the second component, T₂, and is in a homogeneous liquid state at a temperature higher than the melting point, Tm.

2. The eutectic mixture according to claim 1, wherein a total content of the first component and the second component is 99% by weight or more based on the entire eutectic mixture.

3. The eutectic mixture according to claim 1 or 2, wherein the melting point, Tm, is higher than 0°C and lower than 50°C.

4. The eutectic mixture according to any one of claims 1 to 3, wherein difference between the melting point of the first component, T₁, and the melting point, Tm, (T₁ - Tm), is 100°C or more.

5. The eutectic mixture according to any one of claims 1 to 4, wherein the first component is selected from quaternary ammonium salts represented by the following general formula (1): 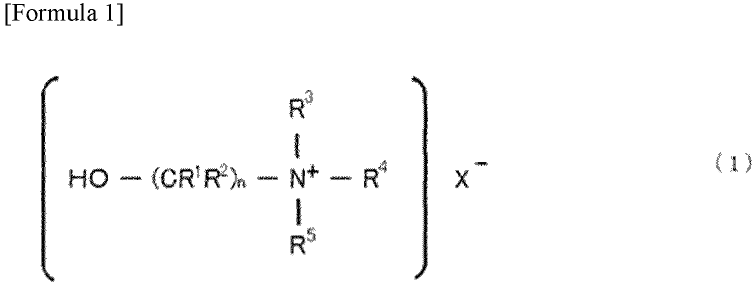 wherein n is an integer of 1 to 3, R¹ and R² are each independently a hydrogen atom or an alkyl group having 1 to 5 carbon atoms, R³, R⁴, and R⁵ are each independently an alkyl group having 1 to 5 carbon atoms, and X is a halogen group.

6. The eutectic mixture according to any one of claims 1 to 5, wherein the first component is choline chloride.

7. The eutectic mixture according to any one of claims 1 to 6, wherein the second component is an aminocarboxylic acid and/or a derivative thereof, the aminocarboxylic acid represented by the following general formula (2): 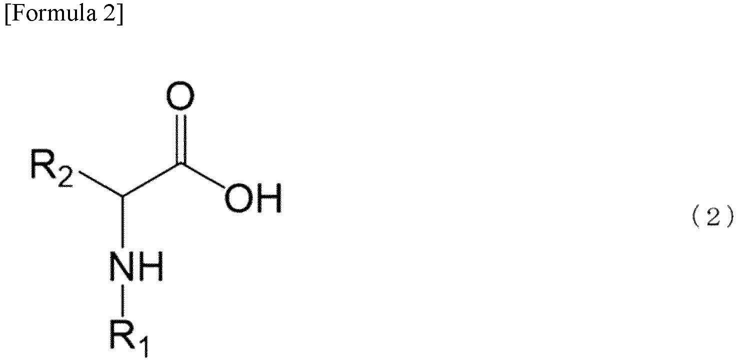 wherein R¹ and R² are each independently a hydrogen atom or a hydrocarbon group optionally having a substituent group.

8. The eutectic mixture according to any one of claims 1 to 7, wherein the second component is an aminocarboxylic acid and/or a derivative thereof, the aminocarboxylic acid represented by the following general formula (3): 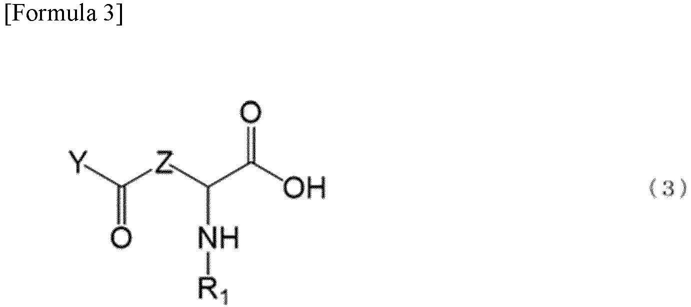 wherein R¹ is a hydrogen atom or a hydrocarbon group optionally having a substituent group, Y is a functional group containing a heteroatom, and Z is an alkylene group having 5 or less carbon atoms and optionally having an unsaturated bond.

9. The eutectic mixture according to any one of claims 1 to 8, wherein the second component is an aminocarboxylic acid and/or a cyclized derivative thereof.

10. The eutectic mixture according to any one of claims 1 to 9, wherein the second component is selected from glutamine, glutamic acid, and pyroglutamic acid.

11. A liquid composition comprising: the eutectic mixture according to any one of claims 1 to 10; and a third component dissolved in the eutectic mixture, wherein the third component contains one or two or more selected from cellulose, hemicellulose, and lignin.

12. The liquid composition according to claim 11, wherein the third component contains lignocellulose.

13. The liquid composition according to claim 11 or 12, wherein, the third component contains one or two or more selected from wood, pulp, and linter.

14. The liquid composition according to any one of claims 11 to 13, wherein the liquid composition is in a liquid state at a temperature equal to or lower than 25°C.

15. A molded article formed from the liquid composition according to any one of claims 11 to 14.
